# EUROPÄISCHE PATENTANMELDUNG

(11) **EP 1 491 922 A1**
(43) Veröffentlichungstag der Anmeldung: **29.12.2004**
(21) Anmeldenummer: 04001641.2
(22) Anmeldetag: 27.01.2004
(51) Int. Cl.: G02B 5/28

(54) **Infrarot-Filter-Bauelement, insbesondere für einen Gasdetektor**

(30) Priorität: 26.06.2003 DE 10328798
(71) Anmelder: ROBERT BOSCH GMBH, 70442 Stuttgart (DE)
(72) Erfinder: Hoechst, Arnim, 72076 Tuebingen (DE); Metzger, Lars, 72116 Moessingen-Belsen (DE); Baer, Hans-Peter, 72793 Pfullingen (DE); Fischer, Frank, 72810 Gomaringen (DE)

(57) **Zusammenfassung**

Die Erfindung betrifft ein IR-Filter-Bauelement und ein Verfahren zu seiner Herstellung.

Erfindungsgemäß wird ein IR-Filterelement mit geringem Aufwand und dennoch hoher Integration hergestellt, mit einem Substrat (2), mindestens einer auf dem Substrat (direkt oder indirekt) ausgebildeten Filtereinrichtung (3, 4), die in lateraler Richtung alternierende erste und zweite, infrarot-transparente, vertikal zur Substratoberfläche (9) verlaufende Bereiche (5, 6; 7, 8) aufweist, die jeweils eine optische Dicke mit einem Vielfachen eines Viertels der Wellenlänge der Infrarot-Strahlung aufweisen.

## Beschreibung

Die Erfindung betrifft ein Infrarot-Filter-Bauelement, das insbesondere für einen Gasdetektor verwendbar ist.

Derartige Infrarot-Filter-Bauelemente weisen Infrarot-Filter bzw. im Infrarot-Bereich wirksame dielektrische Spiegel auf, die durch Mehrschichtsysteme mit in der Regel zwei verschiedenen Filtermaterialien gebildet werden. Mit ihnen wird selektiv eine Wellenlänge λ aus dem einfallenden kontinuierlichen Spektrum herausgefiltert oder reflektiert. Die Materialien der alternierenden Spiegelschichten weisen hierbei unterschiedliche Brechungsindizes auf und werden auf einem Substrat, z. B. Glas oder Silizium, alternierend übereinander abgeschieden, wodurch bei geeigneter Wahl der Schichtdicke der horizontal übereinander liegenden Schichten die Filterwirkung erreicht wird. Die Dicke der einzelnen Schichten beträgt jeweils ein natürliches Vielfaches von λ/4, d. h. z. B. λ/4, λ/2 usw. Durch geeignete Wahl der Schichtdicken und ggf. eine hohe Anzahl von z. B. mehr als zwanzig übereinander ausgebildeten Schichten kann eine schmalbandige Reflexionscharakteristik oder Transmissionscharakteristik erreicht werden, so dass eine Wellenlänge λ aus einem schmalbandigen Bereich mit hoher Genauigkeit aus dem einfallenden kontinuierlichen Spektrum herausgefiltert werden kann.

Die DE 44 07 832 A1 zeigt ein Verfahren zur Herstellung optoelektronischer Bauelemente mit einer definierten axialen Variation des Kopplungskoeffizienten und definierter Verteilung der Phasenverschiebung. Die optoelektronischen Bauelemente weisen eine periodisch strukturierte Grenzfläche zwischen zwei Halbleiter-Schichten mit unterschiedlichen Brechungsindizes auf, wodurch eine optische Rückkopplung des geführten Lichtes nach dem Prinzip eines DFB (Distributed Feedback)- oder DBR (Ditributed Bragg- Reflektor)-Gitters bewirkt wird. Das Licht wird somit unterhalb dieser Gitterstrukturierung im Halbleitermaterial geführt, wobei die optische Rückkopplung durch in longitudinaler Richtung periodisch strukturierte Materialgitter realisiert wird, die eine periodische Variation des Real- und/oder Imaginärteils des Brechungsindex erreichen. Das Bauelement weist verschiedene, in vertikaler Richtung auf dem Substrat übereinander angeordnete Halbleiterschichtpakete auf, die in vertikaler Richtung verschiedene Einzelschichten aufweisen können. Durch Strukturierung in longitudinaler Richtung ist ein Gitter mit konstanter Gitterperiode und konstanter Gittergrabentiefe ausgebildet, das in einer lateralen Richtung begrenzt ist. Hierbei können in lateraler Richtung Bereiche mit Gittergräben und gitterfreie Bereiche nebeneinander ausgebildet werden. Die Gitterstrukturierung kann hierbei mittels Photolack- und Ätztechnik ausgebildet werden.

Das erfindungsgemäße Infrarot-Filter-Bauelement weist gegenüber herkömmlichen Infrarot-Filter-Bauelementen insbesondere den Vorteil auf, dass mit relativ geringem Aufwand eine hohe Integration auf einem Substrat möglich ist. Hierbei können vorteilhafterweise auch mit relativ geringem Aufwand mehrere unterschiedliche Filtereinrichtungen auf einem Substrat integriert werden. Weiterhin können in den Filtereinrichtungen auch mehr als zwei alternierende Bereiche ausgebildet werden. Das erfindungsgemäße Bauelement kann insbesondere eine hohe Integration gewährleisten, indem ein vorprozessierter Chip mit integrierten Schaltungen, Umlenkspiegeln und/oder Wellenleitern verwendet wird.

Der Erfindung liegt der Gedanke zugrunde, ein oder mehrere Infrarot-Filtereinrichtungen in horizontaler Richtung, d. h. parallel zur Substratoberfläche bzw. Chipoberfläche, derartig auszubilden, dass die optische Achse der Infrarot-Strahlung in der lateralen Richtung durch die mindestens eine Filtereinrichtung verläuft. Vorteilhafterweise sind hierbei mehrere unterschiedliche Filtereinrichtungen im Strahlengang hintereinander angeordnet. Somit kann die Filtereinrichtung bzw. können die mehreren Filtereinrichtungen in einer Schicht durch laterale Strukturierung ausgebildet werden; hierbei können insbesondere mehrere Filtereinrichtungen mit unterschiedlichen Zentralwellenlängen hintereinander ausgebildet werden.

Die alternierenden Bereiche können insbesondere durch Tiefenätzen des Substrats, z. B. mittels eines DRIE (Deep Reactive lon Etching) oder eines Prozesses unter alternierendem Ätzen und Passivieren ausgebildet werden, bei denen mit hoher Ätzrate nahezu senkrechte Seitenwände der Strukturen erzeugt werden. Hierdurch werden Stege und zwischen den Stegen ausgebildete Gräben erzeugt, die bereits direkt als die alternierenden Bereiche der dielektrischen Filtereinrichtung verwendet werden können, wobei die Gräben Luft oder ein anderes infrarot-transparentes Material, das nach dem Ätzen der Strukturen aufgetragen wird, aufweisen können. Durch Ätzen der Tiefenstrukturen kann ein großer Querschnitt des Filters senkrecht zur optischen Achse bzw. zum Strahlengang ausgebildet werden, so dass hohe Transmissionsintensitäten und geringe Beugungsverluste ermöglicht werden. Hierdurch können auf einem Wafer bzw. auf einem Chip eine Vielzahl von optischen Filtern und Strukturen kostengünstig hergestellt werden, z. B. Filter und/oder Spiegel für verschiedene Zentralwellenlängen in Gasdetektoren. Der Wafer kann weiterhin bereits vorprozessiert sein mit integrierten Schaltungen, Umlenkspiegeln und/oder Wellenleitern.

Weiterhin kann die durch Tiefenätzen erzeugte Struktur aus Stegen und Gräben nachträglich durch ein geeigneten Verfahren behandelt, insbesondere oxidiert oder z. B. nitridiert werden. Hierdurch können bereits zusätzlich zu den aus dem Substratmaterial bestehenden inneren Bereichen der Stege und den freien oder mit einem weiteren Material aufgefüllten Gräben dazwischen liegende dritte Bereiche mit einer Oxidschicht des Substratmaterials ausgebildet werden, wobei die laterale Dicke der Oxidschicht und entsprechend die abnehmende Dicke der inneren Bereiche der Stege in gewünschter Weise eingestellt werden können.

Weiterhin kann nachfolgend aus den Stegen das Substratmaterial zwischen den Oxidschichten durch z. B. selektives Ätzen entfernt werden, so dass eine Struktur aus vertikal verlaufenden Oxidschichten und dazwischen verbleibenden Gräben verbleibt, die entsprechend mit einem weiteren Halbleitermaterial aufgefüllt werden kann.

Grundsätzlich ist es auch möglich, mehrere durch die erfindungsgemäße laterale Strukturierung erzeugte Filter in verschiedenen Schichten vertikal übereinander anzuordnen, um z. B. mehrere Detektoren parallel zu betreiben oder einen Sensor und einen Referenzsensor optisch in den verschiedenen Schichten parallel zu betreiben. Weiterhin können mehrere Filtereinrichtungen auch durch Strukturierung in longitudinaler Richtung, d. h. in horizontaler, zu der lateralen Richtung orthogonaler Richtung, strukturiert werden.

Die Erfindung wird im Folgenden anhand der beiliegenden Zeichnungen an einigen Ausführungsformen näher erläutert. Es zeigen:

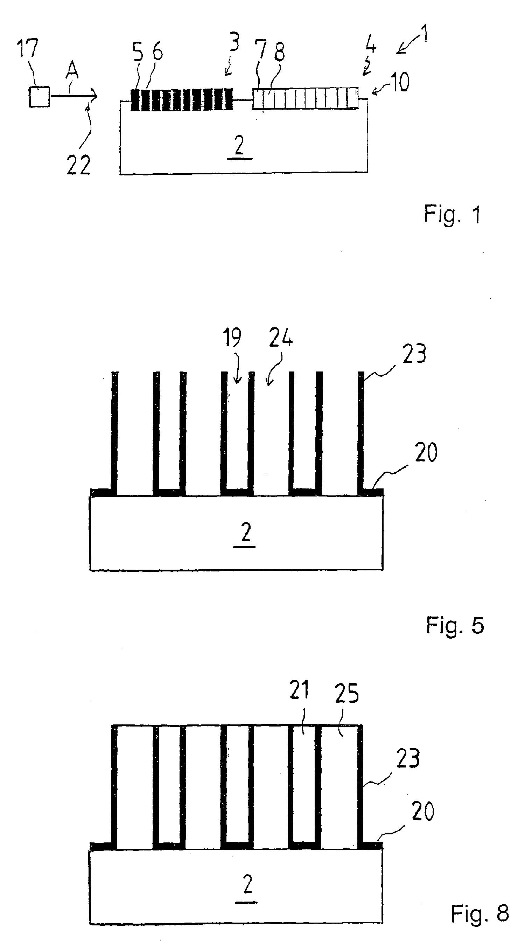

- Fig. 1: ein erfindungsgemäßes IR-Filter-Bauelement mit zwei Filtereinrichtungen;
- Fig. 2: einen ersten Prozessschritt zur Herstellung eines erfindungsgemäßen Bauelementes;
- Fig. 3: ein Bauelement gemäß einer erfindungsgemäßen Ausführungsform und als Zwischenschritt für weitere Ausführungsformen;
- Fig. 4: ein Bauelement gemäß einer erfindungsgemäßen Ausführungsform und als Zwischenschritt für weitere Ausführungsformen;
- Fig. 5: ein Bauelement gemäß einer weiteren Ausführungsform und als Zwischenschritt für weitere Ausführungsformen;
- Fig. 6: ein aus dem Bauelement der Fig. 3 hergestelltes weiteres Bauelement;
- Fig. 7: ein aus dem Bauelement der Fig. 4 hergestelltes weiteres Bauelement;
- Fig. 8: ein aus dem Bauelement der Fig. 5 hergestelltes weiteres Bauelement.

Ein IR-Filter-Bauelement 1 weist ein Substrat 2, z. B. aus Silizium, und eine auf dem Substrat 2 ausgebildete Filterschicht 10 mit einer ersten IR-Filtereinrichtung 3 und einer in einer lateralen Richtung neben dieser oder hinter dieser angeordneten zweiten IR-Filtereinrichtung 4 auf. Die Filtereinrichtung 3 weist in lateraler Richtung alternierende erste Bereiche 5 und zweite Bereiche 6 mit unterschiedlichen optischen Brechungsindizes n1, n2 auf; entsprechend weist auch die zweite IR-Filtereinrichtung alternierende erste Bereiche 7 und zweite Bereiche 8 aus Materialien mit unterschiedlichen optischen Brechungsindizes n3, n4 auf, wobei z. B. n1 gleich n3 und n2 gleich n4 sein kann. IR-Strahlung von einer IR-Strahlungsquelle 17 tritt entlang einer in lateraler Richtung verlaufenden optischen Achse A durch die Filtereinrichtungen 3 und 4. Die laterale Dicke der Bereiche 5, 6, 7, 8 entspricht jeweils einem Vielfachen von λ/4, wobei λ die Zentralwellenlänge einfallender IR-Strahlung ist; alternativ hierzu können die lateralen Dicken der Bereiche 5, 6 auch Vielfache von ¼ λ1 und die lateralen Dicken der Bereiche 7, 8 auch Vielfache von ¼ λ2 sein, wobei λ1, λ2 verschiedene Zentralwellenlängen z. B. in einem Bereich um eine mittlere Wellenlänge λ sind. Erfindungsgemäß können weiterhin auch mehr als zwei unterschiedliche Bereiche alternieren.

Die Filtereinrichtungen 3 und 4 können als dielektrische Filter oder Spiegel eine Transmission oder Reflexion der Zentralwellenlänge λ bewirken. Hierdurch kann insbesondere eine Zentralwellenlänge λ oder mehrere Wellenlängen λ1, λ2 zur Ermittlung der Absorption in einem Absorptionsbereich 22 zwischen der IR-Strahlungsquelle 17 und dem Bauelement 2 ermittelt werden, woraus eine Gaskonzentration von z. B. Kohlendioxid oder anderen IR-absorbierenden Gasen in dem Absorptionsbereich 22 ermittelt werden kann.

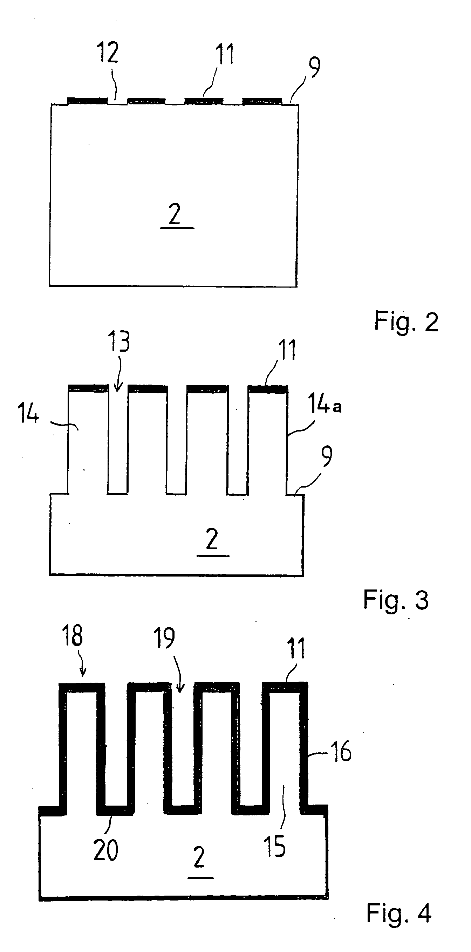

Die Filtereinrichtungen 3 und 4 können gemäß den Fig. 2 bis 8 auf unterschiedliche Weise hergestellt werden. Gemäß einem ersten Verfahrensschritt der Fig. 2 wird auf dem Substrat 2 eine Siliziumnitrid-Schicht 11 mit geeigneter Strukturierung abgeschieden. Das Substrat 2 kann aus Silizium (Si), SOI (Silicon On Insulator) oder SOG (Silicon On Glass) bestehen. Die Siliziumnitrid-Schicht 11 wird mit bekannten Verfahren der Photolithographie und des Trockenätzens strukturiert, wodurch Freiräume 12 ausgebildet werden. Hierbei kann unter der Nitrid-Schicht 11 eine dünne Oxidschicht abgeschieden werden, um eine Selektivität beim Strukturieren der Nitrid-Schicht gegenüber dem Silizium-Substrat 2 zu erhalten.

In einem darauf folgenden Prozess-Schritt wird gemäß Fig. 3 die Struktur der Nitrid-Schicht 11 mit einem Trockenätzverfahren, z. B. einem DRIE-Verfahren, in das Substrat 2 übertragen. Die geätzte Struktur besteht aus Gräben 13 und Silizium-Stegen 14. Hierbei können z. B. als Gräben 13 Trenchgräben mit einer Stegbreite von 4 µm bis 5 µm und einer Grabentiefe von 3 µm bis zu über 400 µm hergestellt werden.

Eine glatte Oberfläche der Seitenwände 14a der Stege 14 kann direkt mittels eines Tiefenätzverfahren erreicht werden; weiterhin kann auch ein nachfolgender Schritt zur Glättung der Seitenwände 14a durchgeführt werden. Die in Fig. 3 gezeigte Struktur kann direkt als Filtereinrichtung 3 oder 4 verwendet werden.

Gemäß der Ausführungsform der Fig. 4 wird die in Fig. 3 gezeigte Struktur nachfolgend oxidiert, wodurch Oxidschichten 16 an den Seitenwänden der Stege und eine Oxidschicht 20 auf der Substratoberfläche 9, d. h. am Boden der Gräben, ausgebildet wird. Bei der Oxidation verringert sich die Breite der Gräben. Für eine gewünschte Zentralwellenlänge λ von 4,26 µm, die der Absorptionslinie von Kohlendioxid (CO₂) entspricht, wird hierbei eine Oxidschicht 16 von 767 nm ausgebildet. Die Breite der Gräben 19 ist gegenüber der Breite der Gräben 13 der Fig. 3 um ca. 843 nm verringert. Die zwischen den Gräben 19 verbleibenden Stege 18 weisen somit weiterhin eine Siliziumnitrid-Schicht 11, darunter einen verbleibenden Silizium-Steg 15 und an den lateralen Seitenwänden Siliziumdioxid (SiO₂)-Schichten 16 auf. Die Breite der verbleibenden Silizium-Stege 15 ist gegenüber der Breite der Silizium-Stege 14 der Fig. 3 entsprechend verringert.

Bei der Ausführungsform der Fig. 4 wird somit eine Schichtfolge Oxid-Silizium-Oxid-Luft erreicht, wobei die Oxidschichten 16 jeweils eine optische Dicke von λ/4 = 729 nm oder ein Vielfaches dieses Wertes aufweisen. Somit wird durch die in Fig. 4 gezeigte Ausführungsform eine Grabentiefe von 2,13 µm erreicht, was der benötigten λ/2-Breite einer Fabry-Pérot-Kavität entspricht. Auch der verbleibende Silizium-Steg 15 kann als Fabry-Pérot-Kavität ausgenutzt werden. Der freie Spektralbereich δ für die Frequenz beträgt δ =c/(2nd) mit c= Lichtgeschwindigkeit, n= Brechungsindex und d= Abstand der Kavität. Über eine Parametervariation kann folglich δ verändert werden. Eine Änderung des Brechungsindex kann somit für die Auslegung des freien Spektralbereichs der Frequenz verwendet werden; hierbei können aufgrund der Brechungsindizes von Luft mit n=1 und Silizium von n=3,43 erfindungsgemäß erhebliche Variationen erreicht werden.

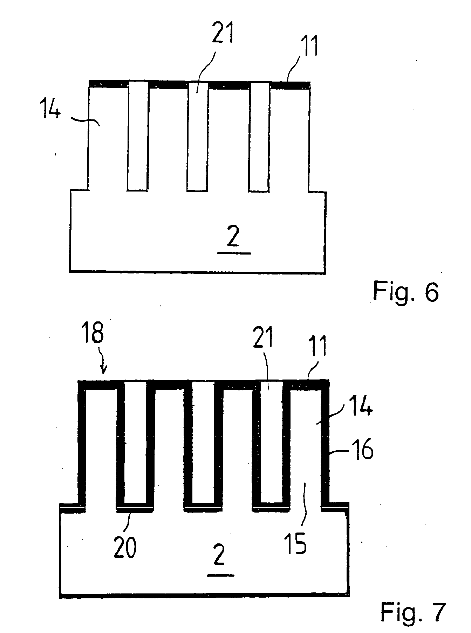

Von Fig. 4 ausgehend kann das Silizium der Silizium-Stege 15 unter der Siliziumnitrid-Schicht 11 entfernt werden, so dass eine Luft-Kavität ausgebildet wird. Hierzu kann z. B. in einem nachfolgenden Schritt die Siliziumnitrid-Schicht 11 zunächst mit einem bekannten selektiven Ätzverfahren, z. B. SF₆-Ätzen, selektiv gegenüber den Oxidschichten 16, 20 entfernt werden. Nachfolgend wird das Siliziummaterial der Silizium-Stege 15 mit Hilfe eines selektiv das Silizium gegenüber dem SiO₂ ätzenden Ätzgas, z. B. Chlortrifluorid, weggeätzt, so dass gemäß Fig. 5 lediglich Siliziumdioxid -Stege 23 verbleiben und Kavitäten bzw. Gräben 24 zwischen den Siliziumdioxid - Stegen 23 verbleiben. Die Gräben 19 und an ihrem Boden ausgebildeten SiO₂-Schichten 20 bleiben unverändert. Da Luft einen kleineren Brechungsindex von n = 1 aufweist, zeichnen sich die Gräben 24 durch einen größeren freien Frequenz-Spektralbereich aus, also einen größeren Abstand zwischen den Frequenz-Transmissionsmaxima. Bei der Ausführungsform der Fig. 5 können insbesondere unterschiedliche laterale Breiten der Gräben 19 und 24 erreicht werden. Es können hierdurch zwei Fabry-Pérot-Filter erzielt werden, die periodisch beliebig oft hintereinander angeordnet werden können. Durch das Hintereinanderschalten der Schichtfolge wird eine Erhöhung der Güte des Filters bzw. Spiegels erreicht. Bei der Ausführungsform der Fig. 5 wird somit eine Schichtfolge Oxid 23 - erste Luftebene 19 -Oxid 23 -zweite Luftebene 24 erreicht. Bei gleicher lateraler Breite der Gräben 19 und 24 von 3/4 λ wird ein Spiegel erreicht.

Von den Ausführungsformen der Figuren 3 bis 5 ausgehend können die Gräben 13, 19, 24 durch ein anderes für IR-Strahlung transparentes Material, z. B. BCB (Benzozyklobuten), Silizium, Gläser und Oxide sowie dotierte Gläser und dotierte Oxide, Nitrid usw, ausgefüllt werden, wodurch die in den Figuren 6 bis 8 gezeigten Ausführungsformen mit den Schichten 21, 25 anstelle der Gräben erreicht werden.

Weiterhin kann von der Fig. 3 ausgehend auch eine vollständige Oxidierung der Silizium-Stege 14 erreicht werden, so dass nachfolgend die Stege 14 aus SiO₂ bestehen. Hierbei wird die Breite der Gräben 13 entsprechend verringert. Bei der vollständigen Aufoxidierung der Stege 14 liegt eine optische Struktur vor, welche sich durch kleine Brechungsindizes der Materialien und damit großen Strukturbreiten auszeichnet; hierdurch können breitere Gräben und Stege als Filterelemente eingesetzt werden, was bei der Tiefenätztechnik vorteilhaft ist. Auch bei dieser Ausführungsform können entsprechend der Fig. 6 nachfolgend die Gräben 13 entsprechend mit anderem Material aufgefüllt werden.

Als Abscheidetechnik können insbesondere Spin-on-Verfahren, LPCVD-Verfahren, elektrophoretische oder galvanische Methoden verwendet werden.

## Patentansprüche

1. Infrarot-Filter-Bauelement, insbesondere für einen Gasdetektor, mit einem Substrat (2),
mindestens einer auf dem Substrat ausgebildeten Filtereinrichtung (3, 4), die in einer lateralen Richtung alternierend aufeinanderfolgende Bereiche (5, 6; 7, 8) aufweist,
wobei die Bereiche (5, 6; 7, 8) jeweils ein für eine Infrarot-Strahlung transparentes Material aufweisen, sich vertikal zu einer Substratoberfläche (9) erstrecken und jeweils in der lateralen Richtung eine optische Dicke von einem Vielfachen eines Viertels einer Zentralwellenlänge der Infrarot-Strahlung aufweisen.

2. Infrarot-Filter-Bauelement nach Anspruch 1, **dadurch gekennzeichnet, dass** eine optische Achse (A) des Infrarot-Filter-Bauelementes (1) im Wesentlichen parallel zur Substratoberfläche (9) durch die Filtereinrichtung (3, 4) verläuft.

3. Infrarot-Filter-Bauelement nach Anspruch 1 oder 2, **dadurch gekennzeichnet, dass** mehrere Infrarot-Filtereinrichtungen (3, 4) in lateraler Richtung hintereinander oder nebeneinander auf dem Substrat (2) ausgebildet sind.

4. Infrarot-Filter-Bauelement nach einem der vorherigen Ansprüche, **dadurch gekennzeichnet, dass** mindestens eine Filtereinrichtung (3, 4) als erste Bereiche (5; 7) durch Tiefenätzen des Substrats (2) ausgebildete Stege (14, 18, 23) und als zweite Bereiche (6;8) zwischen den Stegen (14, 18) ausgebildete Gräben (13, 19, 21, 24, 25) aufweist.

5. Infrarot-Filter-Bauelement nach Anspruch 4, **dadurch gekennzeichnet, dass** die Stege (18) an ihren lateralen Seitenflächen Schichten (16) aufweisen, die aus einem durch einen Prozessschritt aus dem Substratmaterial hergestellten Material, vorzugsweise einem Oxid oder Nitrid des Substratmaterials, bestehen.

6. Infrarot-Filter-Bauelement nach einem der vorherigen Ansprüche, **dadurch gekennzeichnet, dass** mindestens eine Filtereinrichtung (3, 4) als erste Bereiche (5; 7) Stege (23) aus einem durch einen Prozessschritt aus dem Substratmaterial hergestellten Material aufweist, und als zweite Bereiche (6;8) zwischen den Stegen (23) ausgebildete Gräben (19, 24, 21, 25) aufweist.

7. Infrarot-Filter-Bauelement nach einem der Ansprüche 4 bis 6, **dadurch gekennzeichnet, dass** die Gräben (21, 25) mit einem Material, z. B. Germanium, BCB, Silizium, einem Glas, Oxid, Nitrid, einem dotierten Glas, dotiertem Oxid und/oder dotiertem Nitrid, aufgefüllt sind.

8. Infrarot-Filter-Bauelement nach einem der vorherigen Ansprüche, **dadurch gekennzeichnet, dass** das Substrat (2) ein vorprozessierter Wafer mit integrierten Einrichtungen, vorzugsweise mindestens einer integrierten Schaltung und/oder einem Umlenkspiegel und/oder einem Wellenleiter, ist.

9. Anordnung aus einer Infrarot-Strahlungsquelle (17) und einem Infrarot-Filter-Bauelement (1) nach einem der vorherigen Ansprüche, wobei die mindestens eine Filtereinrichtung (3, 4) des Infrarot-Filter-Bauelements (1) in der optischen Achse (A) der Infrarot-Strahlungseinrichtung (17) liegt.

10. Verfahren zum Herstellen eines Infrarot-Filter-Bauelements nach einem der Ansprüche 1 bis 8, mit mindestens folgenden Schritten: Ausbilden von mehreren, in einer lateralen Richtung aufeinander folgenden Stegen (14, 18, 23) als erste Bereiche (5, 7) und zwischen den Stegen angeordneten Gräben (13, 19, 21, 24, 25) als zweite Bereiche (6, 8), wobei die aufeinanderfolgenden mindestens zwei verschiedenen Bereiche (5, 7; 6, 8) jeweils eine laterale Breite von einem Vielfachen eines Viertels der Zentralwellenlänge (λ) der Infrarot-Strahlung aufweisen.

11. Verfahren nach Anspruch 10, **dadurch gekennzeichnet, dass** die Stege (14) und Gräben (13) durch Tiefätzen, z. B. mittels eines DRIE- Verfahrens oder eines Verfahrens unter abwechselndem Ätzen und Passivieren, in dem Substrat (2) ausgebildet werden.

12. Verfahren nach Anspruch 10 oder 11, **gekennzeichnet durch** mindestens folgende Schritte:
Tiefenätzen von Gräben (13) zwischen mehreren, in lateraler Richtung aufeinander folgenden Stegen (14),
Ausbilden einer Schicht (16) aus einem von dem Substratmaterial verschiedenen Material an den Stegen (14).

13. Verfahren nach Anspruch 12, **dadurch gekennzeichnet, dass** nachfolgend in den Stegen (18) zwischen den vertikalen Oxidschichten (16) verbleibende Substratstege (15) entfernt werden, z. B. durch selektives Ätzen.

14. Verfahren nach einem der Ansprüche 10 bis 13, **dadurch gekennzeichnet, dass** nach Ausbilden der Stege (14; 18; 23) die zwischen den Stegen (14; 18; 23) ausgebildeten Gräben (13; 19; 24) mit einem IR-transparenten Material aufgefüllt werden.
